# EUROPÄISCHE PATENTSCHRIFT

(11) **EP 1 460 507 B1**
(45) Veröffentlichungstag und Bekanntmachung des Hinweises auf die Patenterteilung: **07.12.2016**
(21) Anmeldenummer: 04002442.4
(22) Anmeldetag: 01.03.2004
(51) Int. Cl.: G05D 23/19, F24D 19/10

(54) **Raumtemperaturregelsystem**
Room temperature control system
Dispositif de régulation de la température d'une pièce

(30) Priorität: 21.03.2003 DE 10312668
(43) Veröffentlichungstag der Anmeldung: 22.09.2004
(73) Patentinhaber: Honeywell AG, Home and Building Control, 71101 Schönaich (DE)
(72) Erfinder: Alber, Kurt, 70771 Leinfelden-Oberaichen (DE); Schilling, Jürgen, 71144 Steinenbronn (DE); Kaiser, Michael, 71083 Herrenberg (DE); Keller, Manfred, 70771 Leinfelden-Oberaichen (DE)
(74) Vertreter: TBK

(56) Entgegenhaltungen:
- EP-A- 0 282 255
- EP-A- 1 355 212
- DE-A1- 4 221 094
- GB-A- 2 173 920
- NL-C2- 1 006 716

## Beschreibung

Die Erfindung bezieht sich auf ein System zum Regeln der Raumtemperatur, vorzugsweise in einem Gebäude mit mehreren räumlichen Abschnitten.

Es ist eine Vielzahl von Regelsystemen dieser Art bekannt. Diese umfassen beispielsweise einen Kessel oder Brenner zur Erwärmung von Wasser, das über Rohre über Heizkörper in den zu erwärmenden Räumen geführt wird.

Die Regelung eines solchen Systems erfolgt dabei häufig unter Berücksichtigung der Raumtemperatur eines einzigen Raumes des Gebäudes, sowie gegebenenfalls unter Berücksichtigung der Außentemperatur.

Die Qualität der Regelung und damit der Wohnkomfort könnte nun dadurch erhöht werden, dass die Temperatur in einer Mehrzahl von Räumen des Gebäudes berücksichtigt wird. Bei einem solchen System kann ein zentrales Raumgerät vorgesehen sein, über das sich die gesamte Heizungsanlage regeln lässt. Dieses Raumgerät gibt an die unterschiedlichen Heizkörperregler des Gebäudes Sollwertsignale ab. Darüber hinaus führt es einer Steuereinheit für den Brenner oder Kessel der Heizungsanlagen eine Bedarfsinformation zu, die die Temperatur in einer Mehrzahl von Räumen berücksichtigt.

In diesem Zusammenhang offenbart die Druckschrift NL-C2-1 006 716 ein drahtgebundenes Regelsystem für eine Zentralheizung gemäß dem Oberbegriff von Patentanspruch 1, das eine Mehrzahl von Mess- und Regeleinheiten zum Empfangen von Sollwerten und zum Senden von Ist-Werten, um Heizkörper zu regeln, einen zentralen Regler zum Senden von Sollwerten und eine Steuereinheit zum Steuern des Kessels und zum Empfangen von Ist-Werten umfasst. Des Weiteren können der zentrale Regler, die Steuereinheit und die Mess- und Regeleinheit jeweils mit einem Adresscode vorgesehen sein.

Systeme dieser Art ziehen jedoch einen erheblichen Verdrahtungsaufwand nach sich, der mit immensen Installationskosten verbunden ist.

Der Erfindung liegt die Aufgabe zugrunde, ein System zum Regeln der Raumtemperatur anzugeben, das eine verbesserte Regelung der Raumtemperatur ohne einen entsprechend erhöhten Verdrahtungsaufwand ermöglicht.

Diese Aufgabe wird durch ein System zum Regeln der Raumtemperatur mit den im Patentanspruch 1 angegebenen Mitteln gelöst.

Das vorgeschlagene System zum Regeln der Raumtemperatur umfasst dementsprechend ein Raumgerät zum Senden von Sollwertsignalen, eine Mehrzahl von Heizkörperreglern zum Empfangen der Sollwertsignale und zum Senden von Bedarfssignalen und eine Steuereinheit zum Empfangen der Bedarfssignale und zum Einstellen der Energiezufuhr zu dem System auf der Grundlage der empfangenen Bedarfssignale, wobei das Raumgerät bei den Heizkörperreglern und der Steuereinheit eingebucht ist.

Dadurch, dass die Heizkörperregler beim Versenden ihrer Bedarfsinformation ein Identifikationssignal des Raumgerätes verwenden, können diese die Steuereinheit direkt ansprechen, obwohl sie niemals bei der Steuereinheit eingebucht wurden oder die Steuereinheit bei ihnen.

Durch diese Maßnahme ist das System einfach zu installieren und darüber hinaus auch einfach zu erweitern. Soll ein neuer Heizkörperregler hinzugefügt werden, wird das Raumgerät wiederum lediglich bei dem neuen Heizkörperregler eingebucht. Da er hierbei auch das Identifikationssignal des Raumgerätes kennen lernt, kann er dies dann auch verwenden, um die Steuereinheit direkt anzusprechen. Darüber hinaus führt diese Maßnahme zu einem verringerten Materialaufwand.

Vorteilhafte Weiterbildungen der Erfindung sind Gegenstand der Unteransprüche.

Das Bedarfssignal umfasst darüber hinaus auch noch eine Information bezüglich der Quantität des Bedarfes sowie ein Identifikationssignal des sendenden Heizkörperreglers. Dies erlaubt der Steuereinheit eine genauere Regelung der Energiezufuhr zu dem System.

Ein bevorzugtes Ausführungsbeispiel der Erfindung wird nachfolgend anhand der Figur beschrieben.

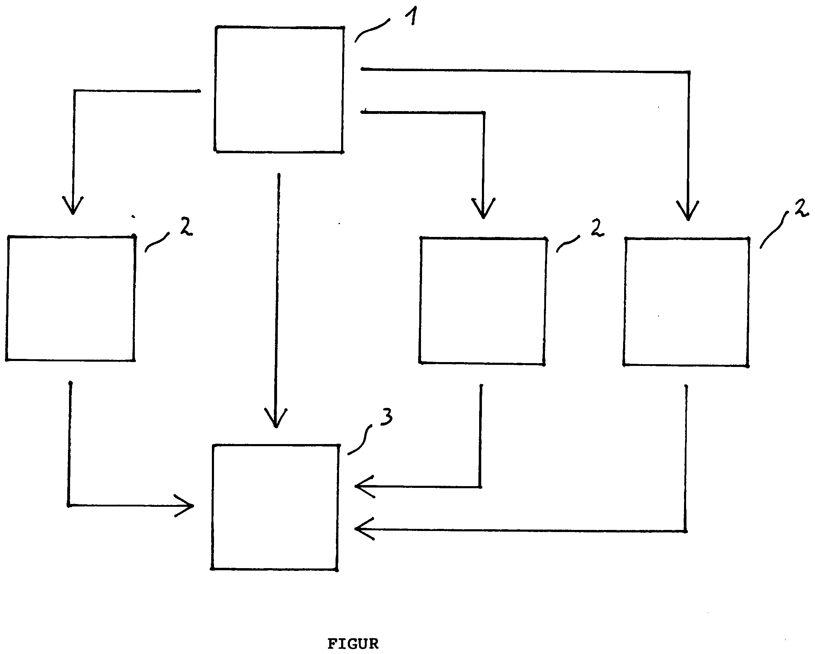

In der Figur 1 ist mit 1 ein Raumgerät, mit 2 ein Heizkörperregler und mit 3 eine Steuereinheit bezeichnet.

Das Raumgerät 1 sendet Sollwertsignale. Die Heizkörperregler 2 senden Bedarfssignale und empfangen Sollwertsignale. Die Steuereinheit 3 empfängt Bedarfssignale und stellt die Energiezufuhr zu einem in der Figur nicht gezeigten Kessel, Brenner oder Durchlauferhitzer ein, der Wasser erwärmt, das den von den Heizköperreglern geregelten Heizkörpern zugeführt wird.

Das vorgeschlagene System verwendet ausschließlich Funksignale. Die dabei verwendeten Funksignale umfassen Identifikationssignale und Informationssignale.

Die Information der Sollwertsignale ist der Sollwert, und die Information der Bedarfssignale ist die Bedarfsinformation.

Das Identifikationssignal des Sollwertsignals umfasst zumindest die Identifikationsnummer des Raumgerätes. Das Identifikationssignal des Bedarfssignals umfasst das Identifikationssignal des Raumgerätes sowie das Identifikationssignal des sendenden Heizkörperreglers.

Hierdurch wird es ermöglicht, dass jeder Heizkörperregler 2 die Steuereinheit 3 direkt ansprechen kann.

Durch diese Maßnahme entfällt Aufwand für das Einbuchen der Heizkörperregler bei der Steuereinheit.

Darüber hinaus wird durch die gezeigte Vorgehensweise lediglich in den Heizkörperreglern 2 eine Sende- und Empfangseinrichtung benötigt. Dagegen kommt das Raumgerät 1 mit lediglich einer Sendeinrichtung und die Steuereinheit 3 lediglich mit einer Empfangseinrichtung aus.

Dies verringert den schaltungstechnischen Aufwand und damit die Kosten des Gesamtsystems.

Die in dem Bedarfssignal enthaltene Information umfasst auch eine Information bezüglich der Quantität des Bedarfs. Diese wird durch eine Information bezüglich des Grades der Öffnung des Ventils des geregelten Heizkörpers repräsentiert. Ein solches Signal sendet jeder Heizkörperregler 2 beispielsweise wiederholt in festen oder variablen Zeitabschnitten. Es ist aber darüber hinaus auch eine Übersendung bei Veränderung des Bedarfs vorgesehen. Dieses Bedarfssignal umfasst ein Identifikationssignal des Raumgerätes 1, sowie auch ein Identifikationssignal des sendenden Heizkörperreglers 2.

In der Steuereinheit 3 werden die Bedarfssignale aller Heizkörperregler 2 empfangen. Die Steuereinheit 3 trifft unter den empfangenen Bedarfssignalen eine Auswahl, beispielsweise indem sie die vier Bedarfssignale mit dem höchsten Bedarf zur weiteren Regelung der Energiezufuhr heranzieht. Hierzu speichert die Steuereinheit 3 die Bedarfssignale aller Heizkörper sowie die Quelle dieser Bedarfssignale, um sie dann zur weiteren Regelung der Energiezufuhr heranziehen zu können.

Bei dem gezeigten System ist das Raumgerät 1 bei dem Heizkörperregler 2 sowie bei der Steuereinheit 3 eingebucht. Zu diesem Zweck wird das Raumgerät 1 zunächst bei der Steuereinheit 3 und dann bei den Heizkörperreglern 2 eingebucht.

Beim Einbuchvorgang wird zunächst der Einbuchvorgang bei dem Heizkörperregler 2 oder der Steuereinheit 3 eingeleitet, beispielsweise durch die Betätigung einer oder mehrerer entsprechender Tasten. Daraufhin wird der Einbuchvorgang am Raumgerät 1 eingeleitet, beispielsweise wiederum durch die Betätigung einer speziellen Taste. Bei diesem Einlernvorgang lernen die Steuereinheit 3 und die Heizkörperregler 2 das Identifikationssignal des Raumgerätes 1 kennen.

Das System gemäß der Figur wird bevorzugt in der Form ausgeliefert, dass es ein Raumgerät 1, eine Steuereinheit 3 sowie drei Heizkörperregler 2 umfasst, wobei das Raumgerät 1 bereits werksseitig bei den drei Heizkörperreglern 2 sowie bei der Steuereinheit 3 eingebucht sind. Durch die oben beschriebenen Maßnahmen ist es aber leicht, diesem System weitere Komponenten hinzuzufügen.

Darüber hinaus ist es durch die Verwendung des Identifikationssignals des Raumgerätes 1 durch die Heizkörperregler 2 möglich, dass die Heizkörperregler 2 mit der Steuereinheit 3 kommunizieren, ohne dass diese beiden Geräte beieinander eingebucht werden. Dies vereinfacht den gesamten Einbuchungsvorgang und erleichtert die Erweiterung des Systems. Darüber hinaus spart diese Maßnahme eine Empfangseinrichtung in dem Raumgerät 1.

Das Raumgerät 1 kann über die oben genannten Funktionen hinaus noch weitere Funktionen erfüllen. Mit Hilfe einer Zeitschaltuhr kann es beispielsweise die Sollwertvorgabe wochentags- und uhrzeitselektiv vornehmen. Darüber hinaus kann es eine Nachtabsenkung in den einzelnen Räumen bewirken.

Das Raumgerät 1 kann mittels eines eigenen Temperaturfühlers weitere Steuerungsaufgaben wahrnehmen oder mittels einer Schnittstelle eine Fernsteuerung des Regelsystems über ein Datennetz ermöglichen.

Die Heizkörperregler umfassen über die genannten Elemente hinaus einen Temperaturfühler, um die Temperatur in der Nähe des Heizkörpers zu ermitteln und eine Einstelleinrichtung, bei der eine Bedienperson den jeweils vorgegebenen Sollwert variieren kann.

Die Steuereinheit kann alternativ zu obiger Darstellungsweise auch derart ausgestattet sein, dass sie eine Regelung der Energiezufuhr durchführt, beispielsweise durch eine Berücksichtigung der Vorlauftemperatur.

## Patentansprüche

1. System zum Regeln der Raumtemperatur mit
einer Mehrzahl von Heizkörperreglern (2) zum Empfangen von Sollwertsignalen und zum Senden von Bedarfssignalen,
einer Steuereinheit (3) zum Empfangen der Bedarfssignale und zum Einstellen der Energiezufuhr zu dem System auf der Grundlage der empfangenen Bedarfssignale, und
einem bei den Heizkörperreglern und der Steuereinheit einzubuchenden Raumgerät (1) zum Senden der Sollwertsignale,
**dadurch gekennzeichnet, dass**
die von den Heizkörperreglern gesendeten Bedarfssignale ein Identifikationssignal des Raumgerätes umfassen.

2. System nach Anspruch 1, **dadurch gekennzeichnet, dass** die Bedarfssignale eine Information bezüglich der Quantität des Bedarfs sowie ein Identifikationssignal des sendenden Heizkörperreglers umfassen.

3. System nach Anspruch 1, **dadurch gekennzeichnet, dass** das Sollwertsignal das Identifikationssignal des Raumgerätes sowie eine Information bezüglich des einzustellenden Sollwertes umfasst.

4. System nach Anspruch 1, **dadurch gekennzeichnet, dass** die Steuereinheit beim Einbuchen des Raumgerätes bei der Steuereinheit zum Einleiten des Einbuchvorgangs zuerst bei der Steuereinheit eingerichtet ist, das Raumgerät zum Einleiten des Einbuchvorgangs daraufhin bei dem Raumgerät und zum Senden seines Identifikationssignals daraufhin eingerichtet ist, und die Steuereinheit schließlich zum Speichern des empfangenen Identifikationssignals eingerichtet ist.

5. System nach Anspruch 1, **dadurch gekennzeichnet, dass** der Heizkörperregler beim Einbuchen des Raumgerätes bei einem Heizkörperregler zum Einleiten des Einbuchvorgangs zuerst bei dem Heizkörperregler eingerichtet ist, das Raumgerät zum Einleiten des Einbuchvorgangs daraufhin bei dem Raumgerät und zum Senden seines Identifikationssignals daraufhin eingerichtet ist, und der Heizkörperreger schließlich zum Speichern der empfangenen Identifikationssignale eingerichtet ist.

6. System nach Anspruch 1, **dadurch gekennzeichnet, dass** die Heizkörperregler zum Senden eines Bedarfssignals zu vorbestimmten Zeitpunkten, nach einem vorbestimmten Zeitintervall oder nach einer Veränderung des Bedarfs eingerichtet sind.

7. System nach Anspruch 1, **dadurch gekennzeichnet, dass** die Steuereinheit zum Einstellen der Energiezufuhr zu dem System anhand ausgewählter Bedarfsinformationen eingerichtet ist.

8. System nach Anspruch 1, **dadurch gekennzeichnet, dass** das System eine Steuereinheit, drei Heizkörperregler und ein bei der Steuereinheit und den Heizkörperreglern eingebuchtes Raumgerät umfasst.

9. Raumgerät für ein System nach einem der vorhergehenden Ansprüche,
das bei einer Mehrzahl von Heizkörperreglern und einer Steuereinheit einzubuchen ist, und
das zum Senden von Sollwertsignalen eingerichtet ist.

10. Steuereinheit für ein System nach einem der Ansprüche 1 bis 8,
die zum Empfangen von Bedarfssignalen und zum Einstellen einer Energiezufuhr zu dem System auf der Grundlage der empfangenen Bedarfssignale eingerichtet ist.

11. Heizkörperregler für ein System nach einem der Ansprüche 1 bis 8,
der zum Empfangen von Sollwertsignalen und zum Senden von Bedarfssignalen eingerichtet ist, und
wobei die von dem Heizkörperregler gesendeten Bedarfssignale ein Identifikationssignal eines Raumgerätes umfassen.

## Claims

1. System for regulating the room temperature, having
a plurality of radiator regulators (2) for receiving desired value signals and for transmitting requirement signals,
a control unit (3) for receiving the requirement signals and for adjusting the supply of energy to the system on the basis of the received requirement signals, and
a room device (1) which is to be registered with the radiator regulators and with the control unit and is intended to transmit the desired value signals,
**characterized in that**
the requirement signals transmitted by the radiator regulators comprise an identification signal of the room device.

2. System according to Claim 1, **characterized in that** the requirement signals comprise an item of information relating to the quantity of the requirement and an identification signal of the transmitting radiator regulator.

3. System according to Claim 1, **characterized in that** the desired value signal comprises the identification signal of the room device and an item of information relating to the desired value to be set.

4. System according to Claim 1, **characterized in that** the control unit is set up, during registration of the room device with the control unit, to initiate the registration process in the control unit first, the room device is set up to then initiate the registration process in the room device and to then transmit its identification signal, and the control unit is finally set up to store the received identification signal.

5. System according to Claim 1, **characterized in that** the radiator regulator is set up, during registration of the room device with a radiator regulator, to initiate the registration process in the radiator regulator first, the room device is set up to then initiate the registration process in the room device and to then transmit its identification signal, and the radiator regulator is finally set up to store the received identification signals.

6. System according to Claim 1, **characterized in that** the radiator regulators are set up to transmit a requirement signal at predetermined times, after a predetermined interval of time or after the requirement has changed.

7. System according to Claim 1, **characterized in that** the control unit is set up to adjust the supply of energy to the system on the basis of selected requirement information.

8. System according to Claim 1, **characterized in that** the system comprises a control unit, three radiator regulators and a room device which is registered with the control unit and with the radiator regulators.

9. Room device for a system according to one of the preceding claims,
which is to be registered with a plurality of radiator regulators and with a control unit, and
which is set up to transmit desired value signals.

10. Control unit for a system according to one of Claims 1 to 8,
which is set up to receive requirement signals and to adjust a supply of energy to the system on the basis of the received requirement signals.

11. Radiator regulator for a system according to one of Claims 1 to 8,
which is set up to receive desired value signals and to transmit requirement signals, and
wherein the requirement signals transmitted by the radiator regulator comprise an identification signal of a room device.

## Revendications

1. Système de régulation de la température ambiante, comprenant
une pluralité de régulateurs de corps de chauffe (2) destinés à recevoir des signaux de valeur de consigne et à envoyer des signaux de besoin,
une unité de commande (3) destinée à recevoir les signaux de besoin et à régler l'apport d'énergie au système en se basant sur les signaux de besoin reçus, et
un appareil d'ambiance (1) à enregistrer auprès des régulateurs de corps de chauffe et de l'unité de commande, destiné à envoyer les signaux de valeur de consigne,
**caractérisé en ce que**
les signaux de besoin envoyés par les régulateurs de corps de chauffe comprennent un signal d'identification de l'appareil d'ambiance.

2. Système selon la revendication 1, **caractérisé en ce que** les signaux de besoin comprennent une information concernant la quantité du besoin ainsi qu'un signal d'identification du régulateur de corps de chauffe émetteur.

3. Système selon la revendication 1, **caractérisé en ce que** le signal de valeur de consigne comprend le signal d'identification de l'appareil d'ambiance ainsi qu'une information concernant la valeur de consigne à régler.

4. Système selon la revendication 1, **caractérisé en ce que** l'unité de commande est conçue pour, lors de l'enregistrement de l'appareil d'ambiance auprès de l'unité de commande, initier tout d'abord le processus d'enregistrement auprès de l'unité de commande, l'appareil d'ambiance est conçu pour initier ensuite le processus d'enregistrement auprès de l'appareil d'ambiance et ensuite pour envoyer son signal d'identification, et l'unité de commande est conçue pour finalement enregistrer en mémoire le signal d'identification reçu.

5. Système selon la revendication 1, **caractérisé en ce que** le régulateur de corps de chauffe est conçu pour, lors de l'enregistrement de l'appareil d'ambiance auprès d'un régulateur de corps de chauffe, initier tout d'abord le processus d'enregistrement auprès du régulateur de corps de chauffe, l'appareil d'ambiance est conçu pour initier ensuite le processus d'enregistrement auprès de l'appareil d'ambiance et ensuite pour envoyer son signal d'identification, et le régulateur de corps de chauffe est conçu pour finalement enregistrer en mémoire les signaux d'identification reçus.

6. Système selon la revendication 1, **caractérisé en ce que** les régulateurs de corps de chauffe sont conçus pour envoyer un signal de besoin à des instants prédéfinis après un intervalle de temps prédéfini ou après une modification du besoin.

7. Système selon la revendication 1, **caractérisé en ce que** l'unité de commande est conçue pour régler l'apport d'énergie au système au moyen d'informations de besoin choisies.

8. Système selon la revendication 1, **caractérisé en ce que** le système comprend une unité de commande, trois régulateurs de corps de chauffe et un appareil d'ambiance enregistré auprès de l'unité de commande et des régulateurs de corps de chauffe.

9. Appareil d'ambiance pour un système selon l'une des revendications précédentes,
lequel est à enregistrer auprès d'une pluralité de régulateurs de corps de chauffe et d'une unité de commande, et
lequel est conçu pour envoyer des signaux de valeur de consigne.

10. Unité de commande pour un système selon l'une des revendications 1 à 8,
laquelle est conçue pour recevoir des signaux de besoin et pour régler un apport d'énergie au système en se basant sur les signaux de besoin reçus.

11. Régulateur de corps de chauffe pour un système selon l'une des revendications 1 à 8,
lequel est conçu pour recevoir des signaux de valeur de consigne et pour envoyer des signaux de besoin, et
les signaux de besoin envoyés par le régulateur de corps de chauffe comprenant un signal d'identification d'un appareil d'ambiance.
